# EUROPEAN PATENT APPLICATION

(11) **EP 4 472 154 A1**
(43) Date of publication of application: **04.12.2024**
(21) Application number: 22924038.7
(22) Date of filing: 01.11.2022
(51) Int. Cl.: H04L 41/08, H04L 41/0866

(54) **COMMUNICATION CONTROL DEVICE, VEHICLE, COMMUNICATION CONTROL METHOD, AND COMMUNICATION CONTROL PROGRAM**

(30) Priority: 26.01.2022 JP 2022010531
(71) Applicant: TOYOTA JIDOSHA KABUSHIKI KAISHA, Toyota-shi Aichi 471-8571 (JP); SUMITOMO ELECTRIC INDUSTRIES, LTD., Osaka-shi, Osaka 541-0041 (JP); AutoNetworks Technologies, Ltd., Yokkaichi-shi, Mie 510-8503 (JP); SUMITOMO WIRING SYSTEMS, LTD., Yokkaichi-shi, Mie 510-8503 (JP)
(72) Inventor: YAMASAKI, Yasuhiro, Toyota-shi, Aichi 471-8571 (JP); MIYAUCHI, Kunihiro, Toyota-shi, Aichi 471-8571 (JP); GOTO, Hideki, Toyota-shi, Aichi 471-8571 (JP); OTAKE, Ikuyoshi, Toyota-shi, Aichi 471-8571 (JP); TANAKA, Hideyuki, Osaka-shi, Osaka 541-0041 (JP); IZUMI, Tatsuya, Osaka-shi, Osaka 541-0041 (JP); OGATA, Kenta, Osaka-shi, Osaka 541-0041 (JP); YAMAMOTO, Yusuke, Osaka-shi, Osaka 541-0041 (JP); GO, Darmawan, Yokkaichi-shi, Mie 510-8503 (JP); KIKUCHI, Yoshitaka, Yokkaichi-shi, Mie 510-8503 (JP); URAYAMA, Hirofumi, Yokkaichi-shi, Mie 510-8503 (JP)
(74) Representative: J A Kemp LLP
(86) International application number: PCT/JP2022/040888
(87) International publication number: WO 2023/145184

(57) **Abstract**

A central ECU serving as a communication control device receives a change notification related to a change in a communication setting of an in-vehicle network, and after receiving the change notification reflects new settings information of the network needed to accompany the change notification in the central ECU and an Ethernet switch connected to the central ECU by reflection at a specific trigger to operate the in-vehicle network.

## Description

### Technical Field

The present disclosure relates to a communication control device to control communication of a network, and a vehicle, a communication control method, and a communication control program of the same.

### Background Art

For example, software defined networking (SDN) technology disclosed in Japanese Patent Application Laid-Open (JP-A) No. 2017-169044 enables communication settings in a network (hereafter referred to as "network settings") to be changed. An SDN network includes an SDN controller and plural SDN switches, and the SDN switches perform network control by the SDN controller distributing network settings to the SDN switches.

### SUMMARY OF INVENTION

### Technical Problem

In technology hitherto, when download of software is performed using a distribution package (OTA), there is a possibility that communication trouble occurs when network settings are not changed to match a timing at which software is activated. Similarly, in technology hitherto, when an ECU is added by plug-and-play, there is a possibility that communication trouble occurs when network settings are not changed to match a timing of logical connection or communication start of the ECU to be added.

The present disclosure provides a communication control device that suppresses communication trouble when changing network settings, and to a vehicle, a communication control method, and a communication control program of the same.

### Solution to Problem

A communication control device of a first aspect is a communication control device that controls communication of a network. The communication control device includes a reception unit that receives a change notification related to a change in a communication setting of the network, and a reflection unit that after receiving the change notification reflects new settings information of the network needed to accompany the change notification in the communication control device and in a switching control unit connected to the communication control device by reflection at a specific trigger to operate the network.

The communication control device of the first aspect is a device that controls communication of the network, and in cases in which the communication settings of the network are to be changed, after the reception unit has received the change notification related to the change in a communication setting, the reflection unit reflects the new settings information in the communication control device and a switching control unit connected to the communication control device by reflection at the specific trigger. This means that the communication control device suppresses communication trouble when changing the network settings due to the communication control device reflecting the communication settings of the communication control device and the switching control unit in the network by reflection at the specific trigger.

A communication control device of a second aspect is the communication control device of the first aspect, wherein the change notification is a notification related to updating software in a control device connected to the network.

The communication control device of the second aspect suppresses communication trouble when communication settings are changed when software is downloaded.

A communication control device of a third aspect is the communication control device of the first aspect or the second aspect, wherein the change notification is a notification accompanying a new control device being connected to the network.

The communication control device of the third aspect suppresses communication trouble when communication settings are changed when a new control device is connected.

A communication control device of a fourth aspect is the communication control device of any one of the first aspect to the third aspect, wherein the reflection unit reflects the new settings information in the switching control unit using completion of download of software as the specific trigger.

The communication control device of the fourth aspect suppresses communication trouble when communication settings are changed when software is downloaded.

A communication control device of a fifth aspect is the communication control device of any one of the first aspect to the third aspect, wherein the reflection unit reflects the new settings information in the switching control unit using rebooting of a system including the network as the specific trigger.

The communication control device of the fifth aspect suppresses communication trouble when communication settings are changed when a new control device is connected.

A communication control device of a sixth aspect is the communication control device of any one of the first aspect to the fifth aspect, further including an inquiry unit that after receiving the change notification and prior to the specific trigger prompts a user as to whether or not to reflect the new settings information in the switching control unit.

In the communication control device of the sixth aspect, the inquiry unit prompts the user as to whether or not to reflect the new settings information in the switching control unit. This prompting is performed by the inquiry unit prior to the specific trigger. This means that the communication control device is able to be make the user aware that a change in network settings is the cause when communication trouble has arisen in the network.

A communication control device of a seventh aspect is the communication control device of any one of the first aspect to the sixth aspect, further including a determination unit that determines whether or not the new settings information of the network needed accompanying the change notification is stored in at least one of the communication control device or a switching control unit connected to the communication control device, and a request unit that requests the new settings information from an external device external to the network in cases in which the determination unit has determined that the new settings information is not stored in either the communication control device or the switching control unit.

In the communication control device of the seventh aspect, in cases in which the determination unit has determined that the new settings information of the network needed to accompany the change notification is not stored at least one of the communication control device or the switching control unit, the request unit requests the new settings information from the external device external to the network when determined that the new settings information is not stored on either the communication control device or the switching control unit. This means that the communication control device is able to reduce the possibility of a problem arising caused by communication going wrong after a settings change of the network even in cases in which the new network settings needed accompanying the change to the communication setting of the network is not known by the communication control device nor the switching control unit.

A communication control device of an eighth aspect is the communication control device of the seventh aspect, wherein when the request unit has requested the new settings information, the reception unit receives the new settings information from the external device and the reflection unit reflects the received new settings information in the switching control unit.

In the communication control device of the eighth aspect, the new settings information from the external device can be received and reflected in the switching control unit even in cases in which the new network settings needed accompanying the change to the communication setting of the network are not known by the communication control device nor the switching control unit, thereby enabling a reduction of the possibility of a problem arising caused by communication going wrong after a settings change of the network.

A communication control device of the ninth aspect is the communication control device of the seventh aspect, wherein the reception unit determines whether or not the communication control device and the switching control unit are operable in cases in which the determination unit has determined that the new settings information is not stored in either the communication control device or the switching control unit, and generates and transmits to the network, a notification that the communication control device and the switching control unit are inoperable and a diagnostic code indicating a cause of the inoperability, in cases in which the communication control device and the switching control unit have been determined to be inoperable.

In the communication control device of the ninth aspect, the reception unit determines whether or not the communication control device and the switching control unit are operable in cases in which the determination unit has determined that the new settings information is not stored in either the communication control device or the switching control unit, and generates and transmits to the network, a notification that the communication control device and the switching control unit are inoperable and the diagnostic code indicating the cause of the inoperability, in cases in which the communication control device and the switching control unit have been determined to be inoperable. Due the user of the vehicle being notified over a network, the notification that the communication control device and the switching control unit are inoperable according to the settings information and notified with the diagnostic code, the user is accordingly readily able to ascertain that the communication control device and the switching control unit are inoperable according to the settings information and the cause of the inoperability.

A vehicle of a tenth aspect is the communication control device of any one of the first aspect to the ninth aspect, including the communication control device of any one of the first aspect to the ninth aspect, at least one switching control unit, and a control device connected to the switching control unit.

In the vehicle of the tenth aspect, the communication settings of the communication control device and the switching control unit of the network are reflected at the specific trigger, and so communication trouble is suppressed in cases in which the network settings are changed, enabling safe travel of the vehicle to be assured.

A communication control method of an eleventh aspect is a communication control method that controls communication of a network. The communication control method is processing executed by a computer, and the processing includes receiving a change notification related to a change in a communication setting of the network, and after receiving the change notification, reflecting new settings information of the network needed to accompany the change notification in a communication control device and a switching control unit connected to the communication control device by reflection at a specific trigger to operate the network.

The communication control method of the eleventh aspect, is a method to control communication of the network in which, in cases in which the communication settings of the network are changed, after receiving the change notification related to the change in the communication setting, the computer reflects the new settings information in the communication control device and the switching control unit at the specific trigger. In the communication control method the communication settings of the communication control device and the switching control unit in the network are accordingly reflected at the specific trigger, and so communication trouble is suppressed when changing network settings.

A communication control program of a twelfth aspect is a communication control program that controls communication of a network, with the communication control program causing processing to be executed by a computer. The processing includes receiving a change notification related to a change in a communication setting of the network, and after receiving the change notification, reflecting new settings information of the network needed to accompany the change notification in a communication control device and a switching control unit connected to the communication control device by reflection at a specific trigger to operate the network.

The communication control program of the twelfth aspect is a program that controls communication of the network and causes the computer to execute the following processing. Namely, in cases in which communication settings of the network are to be ch anged, after receiving the change notification related to changing communication settings, the computer reflects the new settings information in the communication control device and the switching control unit by reflection at the specific trigger. This means that the communication control program reflects the communication settings of the communication control device and the switching control unit in the network at the specific trigger, and so communication trouble is suppressed when changing network settings.

The present disclosure enables communication trouble to be suppressed when changing network settings.

### BRIEF DESCRIPTION OF DRAWINGS

Fig. 1 is a diagram illustrating a schematic structure of a communication control system according to a first exemplary embodiment.
Fig. 2 is a block diagram illustrating a hardware structure of an ECU in a vehicle of the first exemplary embodiment.
Fig. 3 is a block diagram illustrating a functional structure of a communication control system of the first exemplary embodiment.
Fig. 4 is a sequence chart illustrating a flow of OTA processing in a communication control system of the first exemplary embodiment.
Fig. 5 is a sequence chart illustrating a flow of OTA processing in a communication control system of the first exemplary embodiment.
Fig. 6 is a sequence chart illustrating a flow of OTA processing in a communication control system of the first exemplary embodiment.
Fig. 7 is a flowchart illustrating a flow of inquiry processing executed in a central ECU of the first exemplary embodiment.
Fig. 8 is a face-on view illustrating an example of a display presented to a user in the first exemplary embodiment.
Fig. 9 is a sequence chart illustrating a flow of plug-and-play processing in a communication control system of the first exemplary embodiment.
Fig. 10 is a sequence chart illustrating a flow of plug-and-play processing in a communication control system of the first exemplary embodiment.
Fig. 11 is a block diagram illustrating a hardware structure of an ECU in a vehicle of a second exemplary embodiment.
Fig. 12 is a block diagram illustrating a hardware structure of an ECU in a vehicle of a third exemplary embodiment.
Fig. 13 is a block diagram illustrating a functional structure of a communication control system of the third exemplary embodiment.

### DESCRIPTION OF EMBODIMENTS

Description follows regarding a communication control system including a communication control device of the present disclosure. Communication control systems are systems that perform communication in a vehicle, and are compatible with software defined networking (SDN) and configured so as to be able to acquire settings information related to settings for communication from a server outside the vehicle as needed.

### First Exemplary Embodiment

### Overall Structure

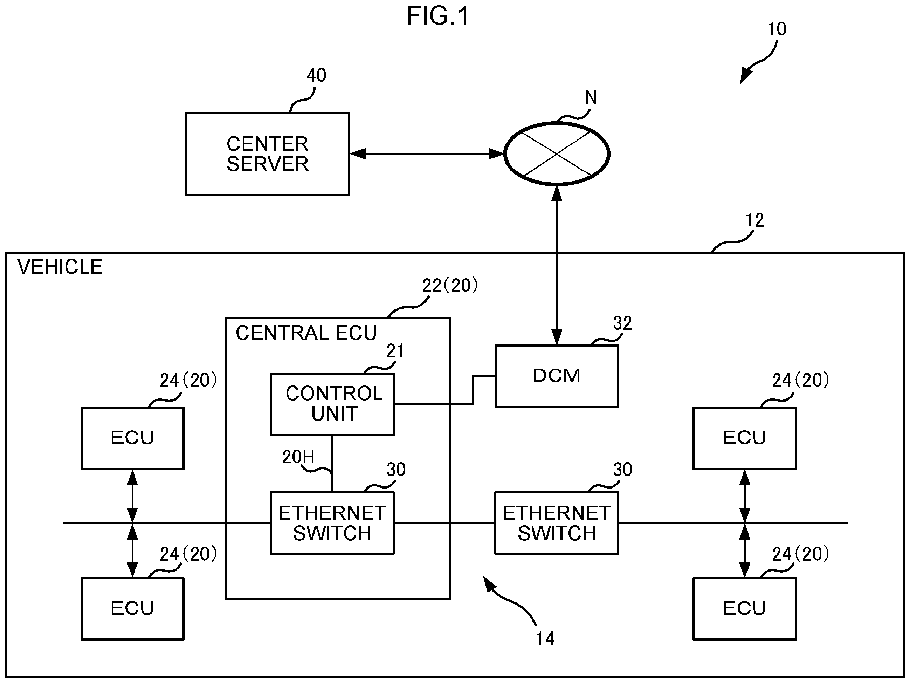

As illustrated in Fig. 1, a communication control system 10 of a first exemplary embodiment is configured including a vehicle 12, and a center server 40 serving as an external device. The center server 40 is installed in a facility of the manufacturer of the vehicle 12 or the like for performing management and operation of the communication control system 10. The vehicle 12 and the center server 40 are connected together over a public network N.

### Vehicle

There is an in-vehicle network 14 in the vehicle 12 of the present exemplary embodiment configured including plural ECUs 20, plural Ethernet switches 30, and a data communication module (DCM) 32. The in-vehicle network 14 is an example of a network. The ECUs 20 include a central ECU 22 for integrated control of the vehicle 12, and an ECU 24 having communication controlled by the central ECU 22. Examples of the ECU 24 include an advance driver assistance system (ADAS)-ECU, a steering ECU, a body ECU, and an information system ECU. The ECU 24 is an example of a control device.

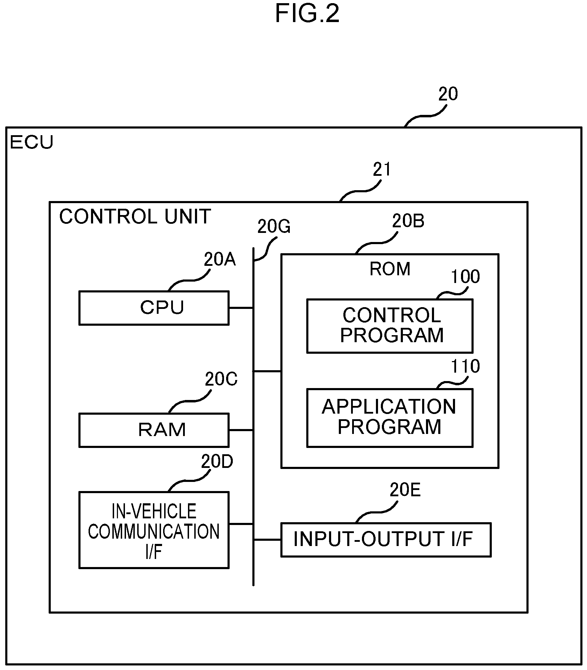

As illustrated in Fig. 2, the ECUs 20 each include at least a control unit 21 that functions as an SDN controller, and as needed is configured including an Ethernet switch 30. The control unit 21 is configured including a central processing unit (CPU) 20A, read only memory (ROM) 20B, random access memory (RAM) 20C, an in-vehicle communication interface (I/F) 20D, and an input-output I/F 20E. The CPU 20A, the ROM 20B, the RAM 20C, the in-vehicle communication I/F 20D, and the input-output I/F 20E are connected together through an internal bus 20G so as to be able to communicate with each other.

The CPU 20A is a central processing unit that executes various programs and controls each unit. Namely, the CPU 20A serves as a processor and reads a program from the ROM 20B serving as memory, and executes the program using the RAM 20C as a workspace.

The ROM 20B stores various programs and various data. A control program 100 that performs control of the ECU 20 including communication is stored on the ROM 20B in the present exemplary embodiment. An application program 110 for implementing an application using the ECU 20 is stored on the ROM 20B. The control program 100 is an example of a communication control program.

The RAM 20C serves as a workspace to temporarily store programs or data.

The in-vehicle communication I/F 20D is an interface for connecting to each of the ECUs 20. This interface employs a communication standard such as Ethernet (registered trademark). The in-vehicle communication I/F 20D is connected to an external bus 20H (see Fig. 1).

The input-output I/F 20E is an interface for connecting the control unit 21 to other devices configuring the ECUs 20. For example, the Ethernet switch 30 is connected to the input-output I/F 20E of the central ECU 22.

The Ethernet switch 30 is a relay device that performs communication by Ethernet (registered trademark), and the Ethernet switch 30 of the present exemplary embodiment functions as an SDN switch. The Ethernet switch 30 performs communication with the ECU 20 based on communication information related to communication settings of the in-vehicle network 14. The Ethernet switch 30 is configured so as to be able to acquire the communication information from the control unit 21 or from other Ethernet switches 30. The Ethernet switch 30 is an example of a switching control unit.

The DCM 32 is a module that performs communication by a communication standard such as 5G, 4G, LTE, or the like. The DCM 32 is connected to a public network N (see Fig. 1). Note that the DCM 32 in the vehicle 12 is connected to the control unit 21 of the central ECU 22, however, there is no limitation thereto, and the DCM 32 may be inbuilt to the central ECU 22 or to the other ECU 24.

### Central ECU

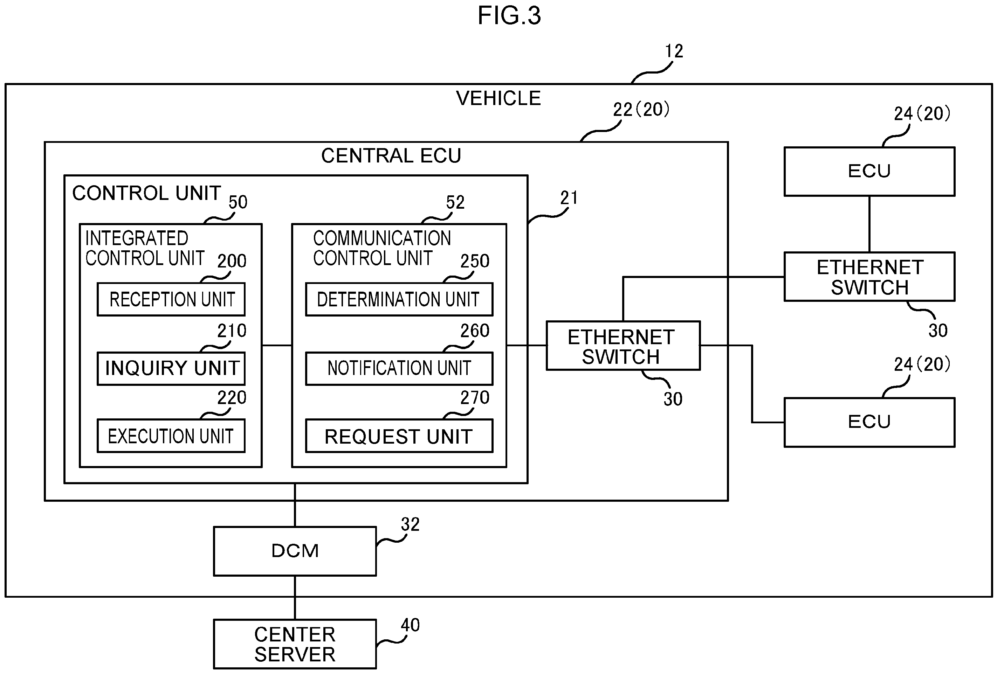

The central ECU 22 is an ECU 20 installed with the control unit 21 and the Ethernet switch 30. In the central ECU 22 of the present exemplary embodiment, the CPU 20A executes the control program 100, and functions as an integrated control unit 50 and a communication control unit 52 illustrated in Fig. 3. The central ECU 22 is an example of a communication control device.

The integrated control unit 50 downloads software such as the application program 110 during update, and controls execution of plug-and-play when a new ECU 20 has been connected to the in-vehicle network 14. The integrated control unit 50 is configured including a reception unit 200, an inquiry unit 210, and an execution unit 220.

The reception unit 200 includes functions to receive detection of a download of the application program 110 and of plug-and-play of an ECU 20. The reception unit 200 of the present exemplary embodiment receives a change notification related to a change to the communication settings of the in-vehicle network 14.

The inquiry unit 210 includes a function to perform an inquiry to a user of the vehicle 12 as to whether or not to change the settings of the in-vehicle network 14.

The execution unit 220 serving as a reflection unit includes a function to perform execution of a settings change on the in-vehicle network 14 accompanying download of software or execution of plug-and-play. When software is being updated, the execution unit 220 of the present exemplary embodiment reflects settings information in the communication control unit 52 and the Ethernet switch 30 as triggered by download of the application program 110 being completed. When plug-and-play is executed, the execution unit 220 also reflects settings information in the communication control unit 52 and the Ethernet switch 30 as triggered by the vehicle 12 being rebooted (namely, by the ignition switch being switched from OFF to ON).

The communication control unit 52 functions as an SDN controller. The communication control unit 52 is configured including a determination unit 250, a notification unit 260, and a request unit 270.

The determination unit 250 includes a function that, when software is downloaded or in plug-and-play, determines whether or not the communication control unit 52 and the Ethernet switch 30 hold appropriate settings information.

The notification unit 260 includes a function to notify the integrated control unit 50 of states of the communication control unit 52 and the Ethernet switch 30. The notification unit 260 of the present exemplary embodiment transmits a diagnostic code to the integrated control unit 50 when a malfunction has occurred in the in-vehicle network 14. The cause of malfunction can be ascertained by the center server 40 or the like that has acquired the diagnostic code through the integrated control unit 50.

The request unit 270 includes a function to request appropriate settings information when the communication control unit 52 and the Ethernet switch 30 do not hold appropriate settings information. In such cases, the request unit 270 of the present exemplary embodiment requests settings information from the integrated control unit 50 or the center server 40. The request unit 270 also requests operation verification to the Ethernet switches 30. Furthermore, the request unit 270 requests activation of the Ethernet switches 30.

### Control Flow

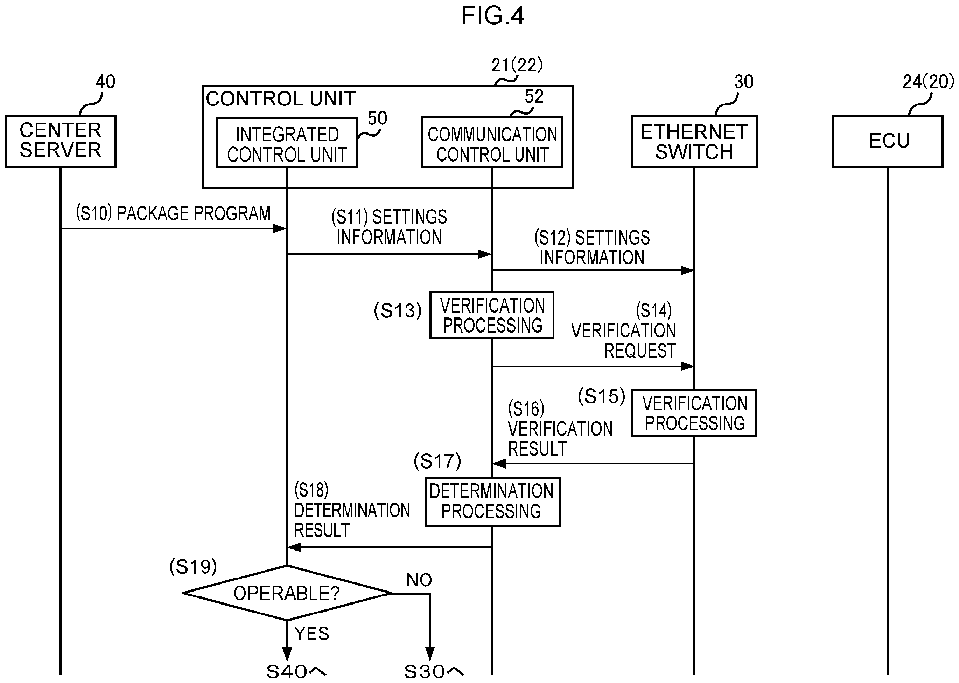

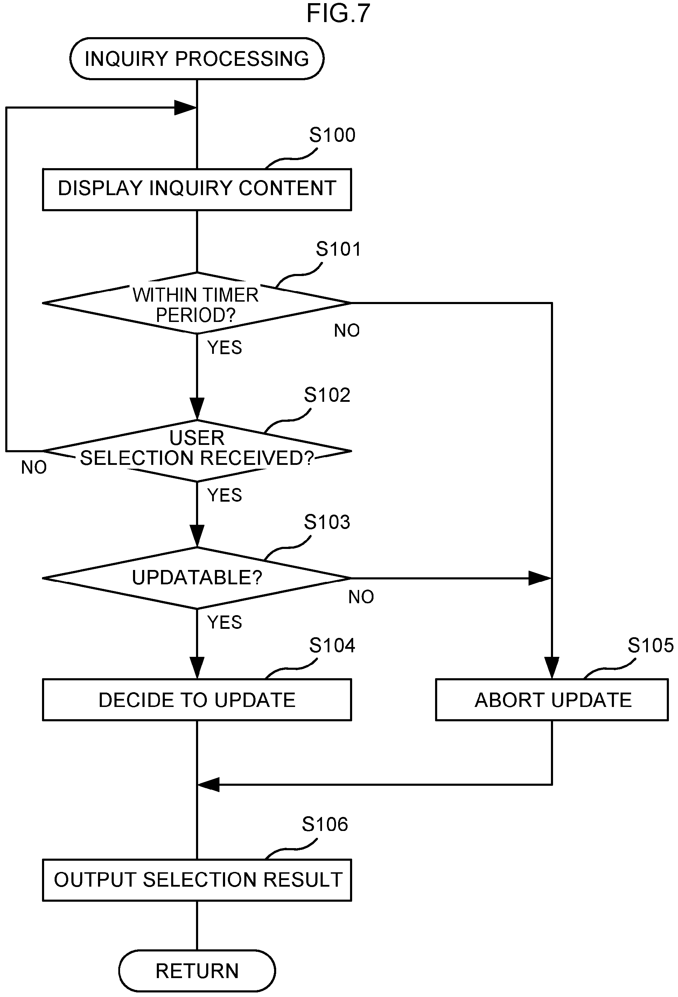

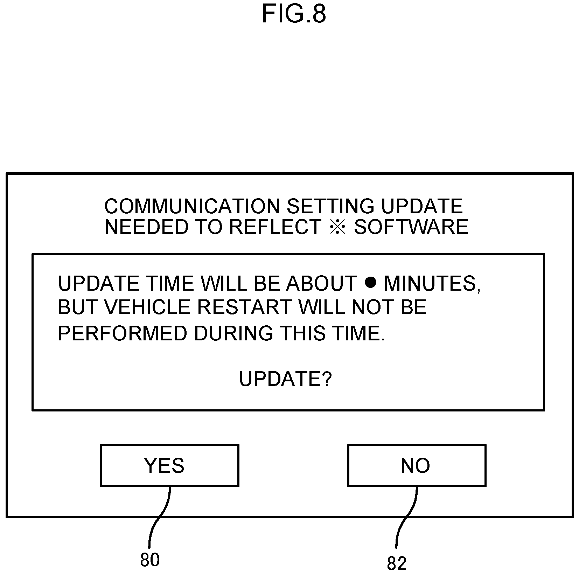

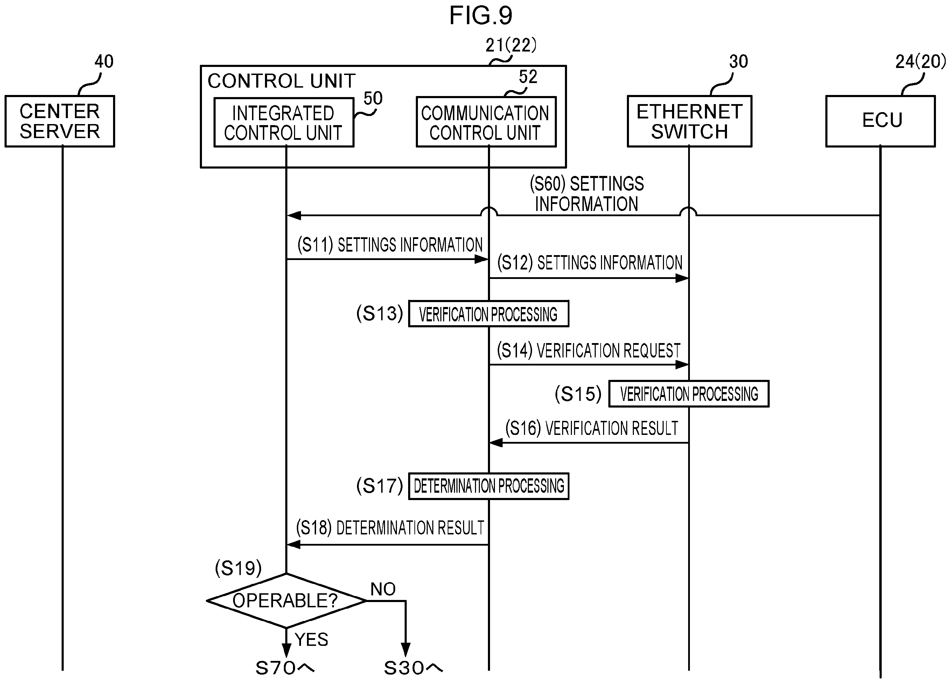

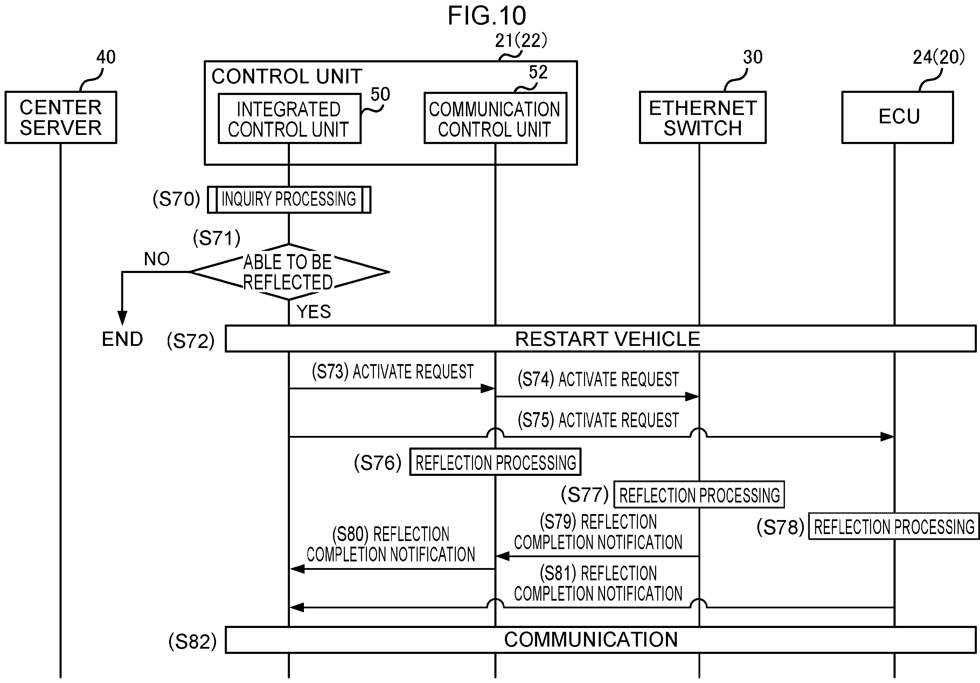

Description follows regarding a flow of processing executed in the communication control system 10 of the present exemplary embodiment, with reference to the sequence charts of Fig. 4 to Fig. 6, the flowchart of Fig. 7, the display screen of Fig. 8, and the sequence chart of Fig. 9 and Fig. 10. The processing in the central ECU 22 is executed by the CPU 20A functioning as the integrated control unit 50 and the communication control unit 52.

First, description follows regarding a flow of overall processing of the system including the center server 40, the control unit 21 of the central ECU 22, the Ethernet switch 30, and the ECU 24. Note that although in each of the sequence charts a single Ethernet switch 30 and a single ECU 24 are illustrated, there is no limitation thereto, and any Ethernet switches 30 and ECUs 24 on the in-vehicle network 14 are applicable.

At step S10 of Fig. 4, the center server 40 transmits a package program to the integrated control unit 50 of the control unit 21. The package program includes the application program 110 and settings information of the in-vehicle network 14.

At step S11, the integrated control unit 50 of the control unit 21 transmits the settings information to the communication control unit 52.

At step S12, the communication control unit 52 of the control unit 21 transmits the settings information to the Ethernet switch 30.

At step S13, the communication control unit 52 of the control unit 21 executes verification processing. Specifically, the communication control unit 52 of the control unit 21 verifies whether or not appropriate settings information is being stored. The appropriate settings information referred to here is settings information enabling the application program 110 downloaded at step S10 to be operated on the in-vehicle network 14.

At step S14, the communication control unit 52 of the control unit 21 performs a verification request to the Ethernet switch 30. Specifically, the communication control unit 52 requests the Ethernet switch 30 to transmit a verification result as to whether or not the Ethernet switch 30 is storing appropriate settings information.

At step S15 the Ethernet switch 30 executes verification processing. Specifically, the Ethernet switch 30 verifies whether or not appropriate settings information is stored.

At step S16, the Ethernet switch 30 transmits the verification result to the communication control unit 52 of the control unit 21. Specifically, the Ethernet switch 30 transmits a verification result as to whether or not the Ethernet switch 30 is stored with settings information to the communication control unit 52.

At step S17, the determination unit 250 of the communication control unit 52 of the control unit 21 executes determination processing. Specifically, the communication control unit 52 performs determination as to whether or not the communication control unit 52 and the Ethernet switch 30 hold appropriate settings information.

At step S18, the communication control unit 52 of the control unit 21 transmits a determination result of the determination processing executed at step S17 to the integrated control unit 50.

At step S19, the integrated control unit 50 of the control unit 21 determines whether or not at least the communication control unit 52 or the Ethernet switch 30 is stored with appropriate settings information, namely the reception unit 200 of the integrated control unit 50 determines whether or not the communication control unit 52 and the Ethernet switch 30 are operable according to the settings information. Processing transitions to step S40 when the reception unit 200 of the integrated control unit 50 has determined that the communication control unit 52 and the Ethernet switch 30 are operable (step S19: YES). However, processing transitions to step S30 when the integrated control unit 50 has determined that the communication control unit 52 and the Ethernet switch 30 are inoperable (step S19: NO).

Next, description follows regarding an overall flow of processing of the system including the center server 40, the control unit 21, the Ethernet switch 30, and the ECU 24 for cases in which the integrated control unit 50 of the control unit 21 has determined that the communication control unit 52 and the Ethernet switch 30 are inoperable.

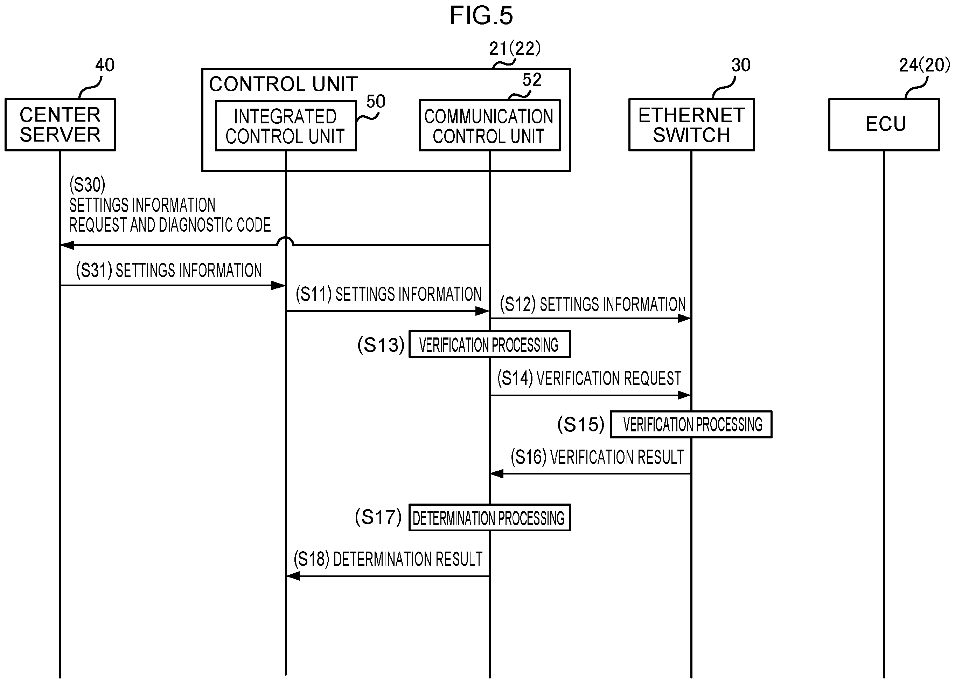

At step S30 of Fig. 5, the request unit 270 of the communication control unit 52 requests from the center server 40 settings information that will make the Ethernet switch 30 operable. In cases in which the reception unit 200 of the integrated control unit 50 has determined at step S19 that the communication control unit 52 and the Ethernet switch 30 are inoperable, a notification indicating this inoperability a diagnostic code is generated and transmitted to the in-vehicle network 14 to indicate this inoperability and the cause of the inoperability, so as to enable the user of the vehicle 12 to ascertain the fact that the Ethernet switch 30 is inoperable according to the settings information and the cause of the inoperability to be ascertained by the user. Then the request unit 270 transmits, to the center server 40 and together with the command requesting settings information, a notification that the ECU 20 and the Ethernet switch 30 in the in-vehicle network 14 are inoperable and a diagnostic code indicating the cause of the inoperability.

At step S31, the center server 40 transmits, to the integrated control unit 50 of the control unit 21, settings information enabling the application program 110 to be operated on the in-vehicle network 14. The reception unit 200 of the integrated control unit 50 receives settings information transmitted from the center server 40.

The center server 40, the control unit 21, the Ethernet switch 30, and the ECU 24 then execute processing the same as the processing from step S11 to step S18 illustrated in Fig. 4.

Next, description follows regarding a flow of overall processing of a system including the center server 40, the control unit 21, the Ethernet switch 30, and the ECU 24 for cases in which the integrated control unit 50 of the control unit 21 has determined that the communication control unit 52 and the Ethernet switch 30 are operable.

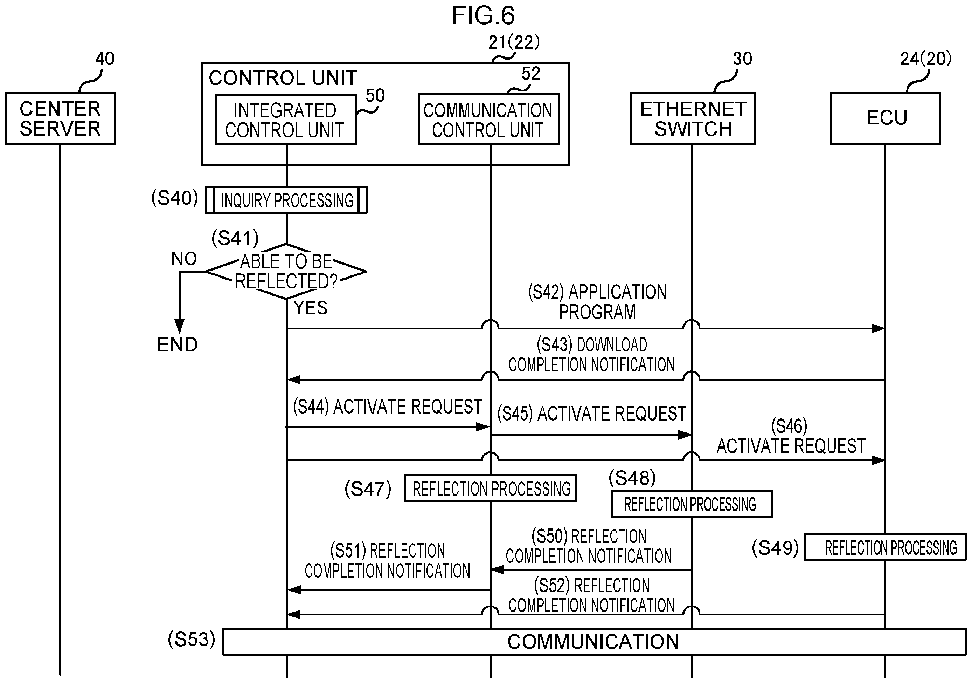

At step S40 of Fig. 6, the integrated control unit 50 of the control unit 21 executes inquiry processing. Details regarding the inquiry processing are described later.

At step S41, the integrated control unit 50 of the control unit 21 determines from the processing results of step S40 whether or not settings information is able to be reflected. The integrated control unit 50 transitions to step S42 in cases in which determination is made that the settings information is able to be reflected (step S41: YES). However, the integrated control unit 50 ends processing in cases in which determination is made that the settings information is not able to be reflected (step S41: NO).

At step S42, the integrated control unit 50 of the control unit 21 transmits the application program 110 to the ECU 24 that is going to install the application program 110.

At step S43, the ECU 24 notifies the integrated control unit 50 of the control unit 21 that download of the application program 110 has been completed.

At step S44, the integrated control unit 50 of the control unit 21 requests the communication control unit 52 to activate. Specifically, the integrated control unit 50 requests the settings information be reflected in the communication control unit 52.

At step S45, the communication control unit 52 of the control unit 21 requests the Ethernet switch 30 to activate. Specifically, the communication control unit 52 requests the settings information to be reflected in the Ethernet switch 30.

At step S46, the integrated control unit 50 of the control unit 21 requests the ECU 24 to activate. Specifically, the integrated control unit 50 request that the settings information be reflected in the ECU 24.

At step S47, the communication control unit 52 of the control unit 21 executes reflection processing. Specifically, the communication control unit 52 reflects the settings information in the communication control unit 52.

At step S48, the Ethernet switch 30 executes reflection processing. Specifically, the Ethernet switch 30 reflects the settings information in the Ethernet switch 30.

At step S49, the ECU 24 executes reflection processing. Specifically, the ECU 24 reflects the installed application program 110 and the settings information.

At step S50, the Ethernet switch 30 notifies the communication control unit 52 of the control unit 21 that the settings information has been reflected in the Ethernet switch 30.

At step S51, the communication control unit 52 of the control unit 21 notifies the integrated control unit 50 of the control unit 21 that the settings information has been reflected in the Ethernet switch 30 and the communication control unit 52.

At step S52, the ECU 24 notifies the integrated control unit 50 of the control unit 21 that the application program 110 installed in the ECU 24 and the settings information have been reflected.

At step S53, the control unit 21, the Ethernet switch 30, and the ECU 24 start communication accompanying the execution of the application program 110 installed in the ECU 24.

Next, description follows regarding the inquiry processing of Fig. 7.

At step S100 of Fig. 7, the integrated control unit 50 displays inquiry content on a monitor, such as an instrument panel, a meter panel, or the like provided in the vehicle 12. Specifically, as illustrated in Fig. 8, display is performed of there being a need to update communication settings in order to reflect software that is the application program 110, and that during update of the communication settings restart of the vehicle 12 is not going be performed for a given period of time. A user of the vehicle 12 selects a button 80 displayed with "Yes" to execute reflection of software including update of communication settings. However, the user of the vehicle 12 selects a button 82 displayed with "No" to not execute reflection of software including update of communication settings.

At step S101, the integrated control unit 50 determines whether or not it is still within a timer period (for example, within one minute from the start of displaying the inquiry content). The integrated control unit 50 transitions to step S102 in cases in which it is still within the timer period (step S101: YES). However, the integrated control unit 50 transitions to step S105 in cases in which the timer period has elapsed (step S101: NO).

At step S102, the integrated control unit 50 determines whether or not a selection as to whether or not to update the communication settings has been received. The integrated control unit 50 transitions to step S103 in cases in which a selection as to whether or not to update the communication settings has been received (step S102: YES). However, the integrated control unit 50 returns to step S100 in cases in which a selection as to whether or not to update the communication settings has not been received (step S102: NO).

At step S103, the integrated control unit 50 determines whether or not a communication setting is updatable. Specifically, the integrated control unit 50 determines whether or not the button 80 has been selected. The integrated control unit 50 transitions to step S104 in cases in which the communication settings are updatable (step S103: YES). However, the integrated control unit 50 transitions to step S105 in cases in which this communication settings are not updatable (step S103: NO).

At step S104, the integrated control unit 50 decides to update the communication settings.

At step S105, the integrated control unit 50 aborts update of the communication settings.

At step S106, the integrated control unit 50 outputs the selection result of the user of the vehicle 12. Specifically, the integrated control unit 50 outputs the user selection result as to whether or not to update the communication settings received when determined at step S102. The integrated control unit 50 then ends the present inquiry processing, and returns to step S40 of Fig. 6.

Next, description follows regarding a flow of plug-and-play processing for when a new ECU 24 has been connected to the in-vehicle network 14, with reference to Fig. 9 and Fig. 10.

A flow of processing of the communication control system 10 illustrated in Fig. 4 and a flow of processing of the communication control system 10 illustrated in Fig. 9 differ in that processing of a step S60 is applied instead of the processing of step S10, and in that processing transitions to step S70 in cases in which affirmative determination is made at step S19. Note that the settings information to be verified during plug-and-play is settings information enabling the newly connected ECU 24 to be operated on the in-vehicle network 14.

The same step numbers to those of Fig. 4 are appended to steps executing the same processing to that of the flow of processing of the communication control system 10 illustrated in Fig. 4, and explanation thereof will be omitted.

At step S60 of Fig. 9, the ECU 24 transmits settings information to the integrated control unit 50 of the control unit 21.

Next, description follows regarding a flow of overall processing of a system including the center server 40, the control unit 21, the Ethernet switch 30, and the ECU 24 for cases in which affirmative determination is made at step S19.

At step S70 of Fig. 10, the integrated control unit 50 of the control unit 21 executes inquiry processing. The flow of inquiry processing is the same as the flow of processing illustrated in Fig. 7.

At step S71, the integrated control unit 50 of the control unit 21 determines whether or not the settings information is able to be reflected from the processing results of step S70. The integrated control unit 50 transitions to step S72 in cases in which the settings information has been determined to be able to be reflected (step S71: YES). On the other hand, the integrated control unit 50 ends processing in cases in which the settings information has been determined not able to be reflected (step S71: NO).

The vehicle 12 is rebooted at step S72. Specifically, the vehicle 12 is controlled such that the ignition is first turned OFF, and then turned ON again.

At step S73, the integrated control unit 50 of the control unit 21 requests the communication control unit 52 to activate. Specifically, the integrated control unit 50 requests the settings information be reflected in the communication control unit 52.

At step S74, the communication control unit 52 of the control unit 21 requests the Ethernet switch 30 to activate. Specifically, the communication control unit 52 request the settings information be reflected in the Ethernet switch 30.

At step S75, the integrated control unit 50 of the control unit 21 requests the ECU 24 to activate. Specifically, the integrated control unit 50 requests that the settings information be reflected in the ECU 24.

At step S76, the communication control unit 52 of the control unit 21 executes reflection processing. Specifically, the communication control unit 52 reflects the settings information in the communication control unit 52.

At step S77, the Ethernet switch 30 executes reflection processing. Specifically, the Ethernet switch 30 reflects the settings information in the Ethernet switch 30.

At step S78, the ECU 24 executes reflection processing. Specifically, the ECU 24 reflects the settings information in the ECU 24.

At step S79, the Ethernet switch 30 notifies the communication control unit 52 of the control unit 21 that the settings information has been reflected in the Ethernet switch 30.

At step S80, the communication control unit 52 of the control unit 21 notifies the integrated control unit 50 of the control unit 21 that the settings information has been reflected in the Ethernet switch 30 and the communication control unit 52.

At step S81, the ECU 24 notifies the integrated control unit 50 of the control unit 21 that the settings information has been reflected in the ECU 24.

At step S82, the control unit 21, the Ethernet switch 30, and the ECU 24 start communication.

### Summary

In the central ECU 22 of the present exemplary embodiment, in cases in which determination has been made that the Ethernet switch 30 is inoperable according to the settings information, the communication control unit 52 notifies the user of the vehicle 12 a notification that the Ethernet switch 30 is inoperable according to the settings information, and notifies a notification and a diagnostic code. This means that a user is able to ascertain that the Ethernet switch 30 is inoperable according to the settings information and the cause of being inoperable.

Moreover, in the central ECU 22 of the present exemplary embodiment, the communication control unit 52 requests the center server 40 for settings information to make the Ethernet switch 30 operable in cases in which the Ethernet switch 30 has been determined inoperable according to the settings information. This means that even though the Ethernet switch 30 is inoperable according to the settings information, settings information that make the Ethernet switch 30 operable can still be acquired.

Moreover, in the central ECU 22 of the present exemplary embodiment, the integrated control unit 50 receives change notification accompanying update of the application program 110 executed in a control device ECU 24 on the in-vehicle network. This means that a change notification can be received accompanying update of the application program 110.

Moreover, in the central ECU 22 of the present exemplary embodiment, the integrated control unit 50 receives change notification in cases in which a new ECU 24 has been connected. This thereby enables change notification to be received in cases in which a new ECU 24 has been connected.

The change notification of the present exemplary embodiment is notification related to update of the application program 110, and the communication control unit 52 determines whether or not settings information based on the updated application program 110 is stored in the central ECU 22. This thereby enables determination as to whether or not settings information is stored based on information of the application program 110.

Moreover, in the central ECU 22 of the present exemplary embodiment, the integrated control unit 50 receives change notification from the center server 40. This thereby enables change notification to be received from a device outside the in-vehicle network 14.

Moreover, in cases in which the communication settings of the in-vehicle network 14 are to be changed, the central ECU 22 of the present exemplary embodiment reflects new settings information in the communication control unit 52 and the Ethernet switch 30 at a specific trigger after change notification related to change of communication settings has been received. This means that in the present exemplary embodiment, communication trouble when network settings are changed is suppressed due to the communication settings of the communication control unit 52 and the Ethernet switch 30 in the in-vehicle network 14 being reflected at the specific trigger.

In particular, in the present exemplary embodiment, communication trouble is suppressed in cases in which the communication settings are changed when software is downloaded by OTA. Moreover, in the present exemplary embodiment, communication trouble is suppressed in cases in which communication settings are changed when plug-and-play is executed accompanying connection of a new ECU 24.

The vehicle 12 of the present exemplary embodiment includes the central ECU 22, at least the one Ethernet switche 30, and the ECU 24. The vehicle 12 of the present exemplary embodiment is, as described above, able to reduce the possibility of a problem arising caused by communication going wrong after a settings change of the in-vehicle network 14, and is able to suppress communication trouble with download of software and plug-and-play. This thereby enables safe travel of the vehicle 12 to be assured.

### Second Exemplary Embodiment

A second exemplary embodiment differs from the first exemplary embodiment in that the Ethernet switch 30 is configured as a separate body to the central ECU 22. Description follows regarding points of difference to the first exemplary embodiment.

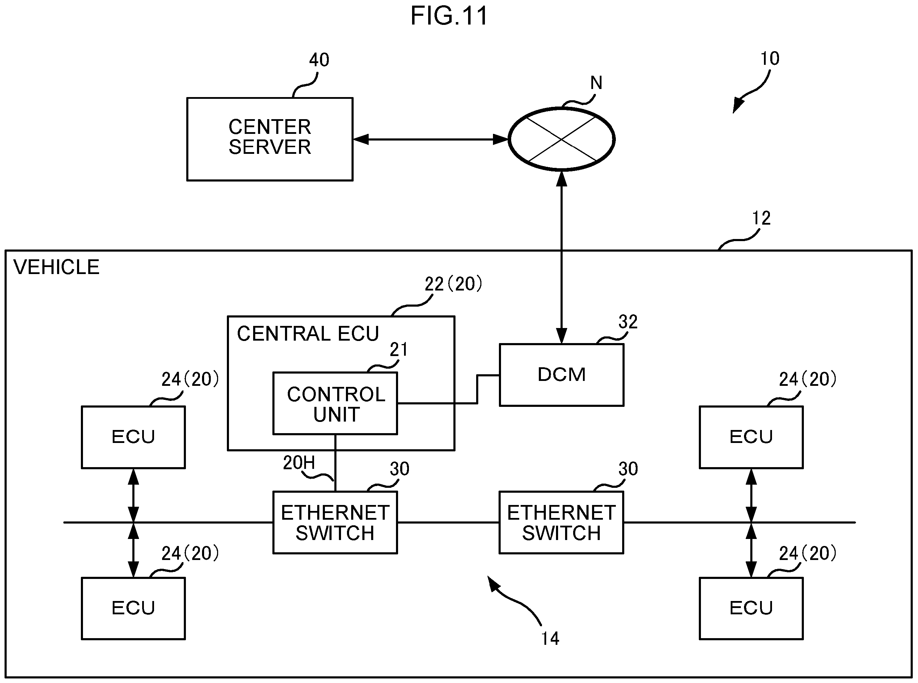

As illustrated in Fig. 11, the central ECU 22 is configured including the control unit 21 alone, and does not include a Ethernet switch 30. Namely, the Ethernet switch 30 is configured as a separate body to the central ECU 22.

As described above, the present exemplary embodiment is configured with the Ethernet switch 30 as a separate body to the central ECU 22. This means that even in cases in which the central ECU 22 does not include the Ethernet switch 30, the present exemplary embodiment enables a situation in which the Ethernet switch 30 is unable to operate according to the new network settings to be ex post facto suppressed from being actualized, in cases in which communication settings of the in-vehicle network 14 have been changed in a user-unaware state.

### Third Exemplary Embodiment

A third exemplary embodiment differs from the first exemplary embodiment in that the integrated control unit 50 of the control unit 21 functions by an ECU 20 separate to the central ECU 22. Description follows regarding points of difference to the first exemplary embodiment.

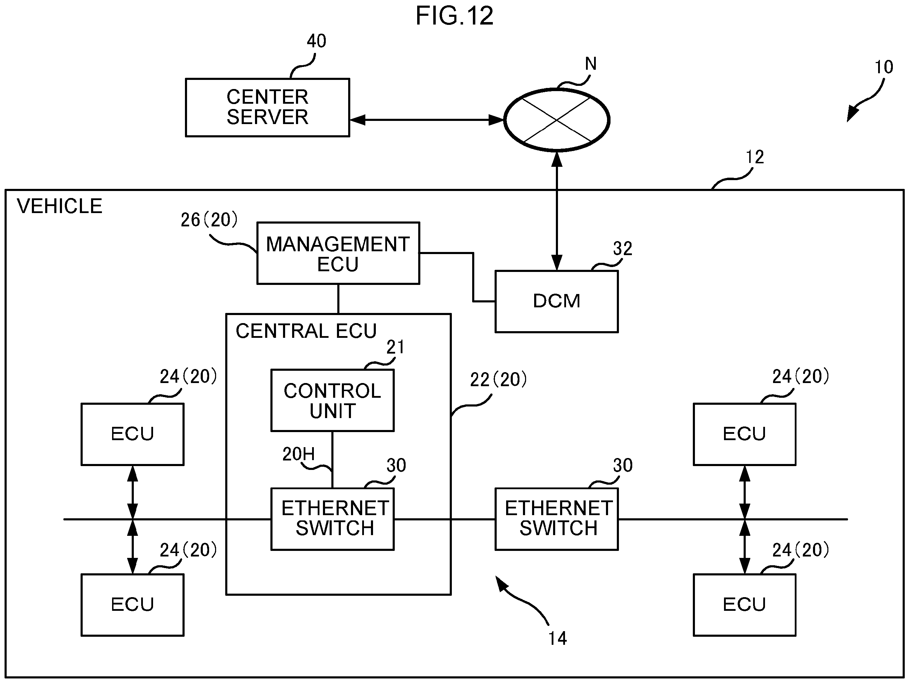

As illustrated in Fig. 12, in the vehicle 12 of the present exemplary embodiment, an in-vehicle network 14 is configured including plural ECUs 20, plural Ethernet switches 30, and a DCM 32. The ECUs 20 include a central ECU 22, an ECU 24, and a management ECU 26. The DCM 32 is connected to a public network N through the management ECU 26.

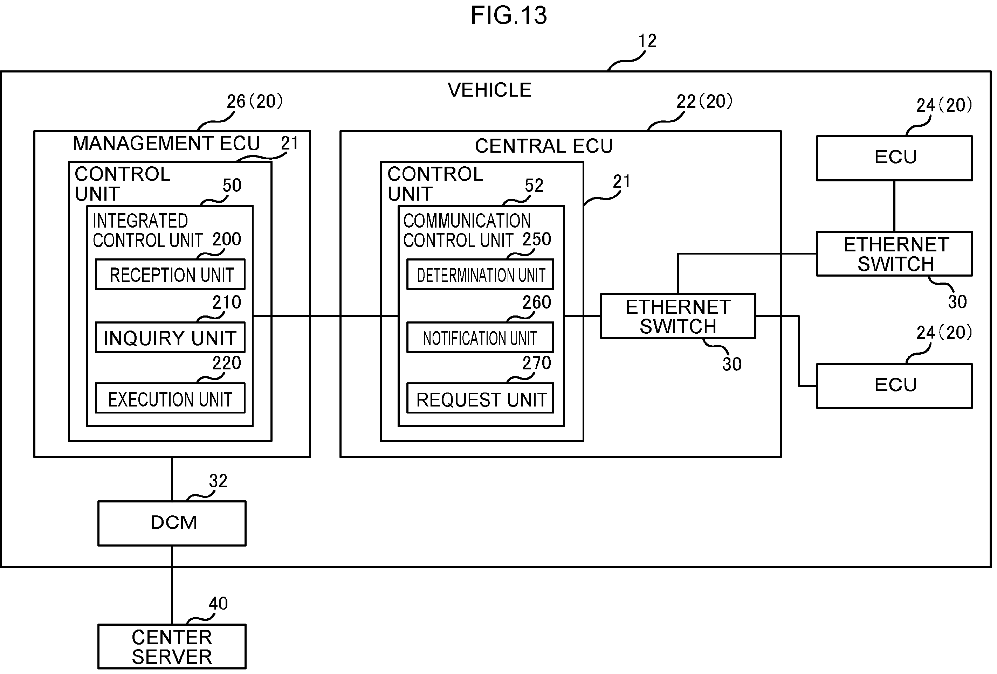

The central ECU 22 functions as a communication control unit 52 illustrated in Fig. 13 by a CPU 20A therein executing a control program 100. On the other hand, the management ECU 26 functions as an integrated control unit 50 illustrated in Fig. 13 by a CPU 20A therein executing the control program 100. Namely, in the vehicle 12 of the present exemplary embodiment, processing of the communication control unit 52 and the integrated control unit 50 related to changing network settings is implemented by plural CPUs 20A.

In the present exemplary embodiment, the integrated control unit 50 of the control unit 21 is caused to function by an ECU 20 separate to the central ECU 22. This means that even in cases in which the integrated control unit 50 of the control unit 21 functions due to an ECU 20 separate to the central ECU 22, the present exemplary embodiment enables a situation in which the Ethernet switch 30 is unable to operate according to the new network settings to be ex post facto suppressed from being actualized in cases in which communication settings of the in-vehicle network 14 have been changed in a user-unaware state.

### Remarks

Note that processing related to changing network settings in each of the above exemplary embodiments has been illustrated by examples of processing when the application program 110 that is software has been downloaded, and of processing when plug-and-play is executed when an ECU 24 has been added to the in-vehicle network 14. However, the processing related to changing network settings of the present exemplary embodiment is not limited in application to such cases, and may be applied to cases in which a structure of the in-vehicle network 14 is built when manufacturing the vehicle 12, or may be applied to cases in which the in-vehicle network 14 has been subjected to an external attack and adopted a failsafe state.

The various processing executed by the CPU 20A reading software (programs) in the above exemplary embodiments may be executed by various processors other than a CPU. Examples of such processors include programmable logic devices (PLD) that allow circuit structure to be modified post-manufacture, such as a field-programmable gate array (FPGA), and dedicated electric circuits, these being processors including a circuit structure custom-designed to execute specific processing, such as an application specific integrated circuit (ASIC). Moreover, each of the above processing may be executed by any one of these various types of processors, or may be executed by a combination of two or more of the same type or different types of processors (such as plural FPGAs, or a combination of a CPU and an FPGA). The hardware structure of these various types of processors is more specifically an electric circuit combining circuit elements such as semiconductor elements.

Moreover, in the above exemplary embodiment a mode has been described in which each program is pre-stored (installed) on a computer-readable non-transitory storage medium. For example, the control program 100 is pre-stored on the ROM 20B of the ECU 20. However, there is no limitation thereto, and each program may be provided in a format stored on a non-transitory storage medium such as a compact disc read only memory (CD-ROM), digital versatile disc read only memory (DVD-ROM), universal serial bus (USB) memory, or the like. Moreover, the programs may be provided in a format downloadable from an external device over a network.

The flows of processing described for the above exemplary embodiments are merely examples thereof, and redundant steps may be omitted, new steps may be added, and the processing sequence may be swapped around within a range not departing from the spirit.

The entire content of the disclosure of Japanese Patent Application No. 2022-010531 filed January 26, 2022 is incorporated by reference in the present specification. All publications, patent applications and technical standards mentioned in the present specification are incorporated by reference in the present specification similarly to as if each referenced individual publication, patent application, or technical standard was specifically and individually indicated to be incorporated by reference.

## Claims

1. A communication control device that controls communication of a network, the communication control device comprising:
a reception unit that receives a change notification related to a change in a communication setting of the network; and
a reflection unit that, after receiving the change notification, reflects new settings information of the network needed to accompany the change notification in the communication control device and in a switching control unit connected to the communication control device, by reflection at a specific trigger to operate the network.

2. The communication control device of claim 1, wherein the change notification is a notification related to updating software in a control device connected to the network.

3. The communication control device of claim 1 or claim 2, wherein the change notification is a notification accompanying a new control device being connected to the network.

4. The communication control device of any one of claim 1 to claim 3, wherein the reflection unit reflects the new settings information in the switching control unit using completion of download of software as the specific trigger.

5. The communication control device of any one of claim 1 to claim 3, wherein the reflection unit reflects the new settings information in the switching control unit using rebooting of a system including the network as the specific trigger.

6. The communication control device of any one of claim 1 to claim 5, further comprising an inquiry unit that, after receiving the change notification and prior to the specific trigger, prompts a user as to whether or not to reflect the new settings information in the switching control unit.

7. The communication control device of any one of claim 1 to claim 6, further comprising:
a determination unit that determines whether or not the new settings information of the network needed accompanying the change notification is stored in at least one of the communication control device or a switching control unit connected to the communication control device; and
a request unit that requests the new settings information from an external device external to the network in cases in which the determination unit has determined that the new settings information is not stored in either the communication control device or the switching control unit.

8. The communication control device of claim 7, wherein when the request unit has requested the new settings information, the reception unit receives the new settings information from the external device and the reflection unit reflects the received new settings information in the switching control unit.

9. The communication control device of claim 7, wherein the reception unit determines whether or not the communication control device and the switching control unit are operable in cases in which the determination unit has determined that the new settings information is not stored in either the communication control device or the switching control unit, and generates and transmits to the network, a notification that the communication control device and the switching control unit are inoperable and a diagnostic code indicating a cause of the inoperability, in cases in which the communication control device and the switching control unit have been determined to be inoperable.

10. A vehicle comprising:
the communication control device of any one of claim 1 to claim 9;
at least one switching control unit; and
a control device connected to the switching control unit.

11. A communication control method that controls communication of a network, the communication control method being processing executed by a computer, and the processing comprising:
receiving a change notification related to a change in a communication setting of the network; and
after receiving the change notification, reflecting new settings information of the network needed to accompany the change notification in a communication control device and a switching control unit connected to the communication control device, by reflection at a specific trigger to operate the network.

12. A communication control program that controls communication of a network, the communication control program causing processing to be executed by a computer and the processing comprising:
receiving a change notification related to a change in a communication setting of the network; and
after receiving the change notification, reflecting new settings information of the network needed to accompany the change notification in a communication control device and a switching control unit connected to the communication control device, by reflection at a specific trigger to operate the network.

## Amended claims

### Amended claims under Art. 19.1 PCT

1. A communication control device that controls communication of a network, the communication control device comprising:
a reception unit that receives a change notification related to a change in a communication setting of the network; and
a reflection unit that, after receiving the change notification, reflects new settings information of the network needed to accompany the change notification in a switching control unit connected to the communication control device, by reflection at a specific trigger to operate the network.

2. The communication control device of claim 1, wherein the reflection unit reflects the new settings information in the communication control device.

3. The communication control device of claim 1 or 2, wherein the change notification is a notification related to updating software in a control device connected to the network.

4. The communication control device of any one of claim 1 to claim 3, wherein the change notification is a notification accompanying a new control device being connected to the network.

5. The communication control device of any one of claim 1 to claim 4, wherein the reflection unit reflects the new settings information in the switching control unit using completion of download of software as the specific trigger.

6. The communication control device of any one of claim 1 to claim 4, wherein the reflection unit reflects the new settings information in the switching control unit using rebooting of a system including the network as the specific trigger.

7. The communication control device of any one of claim 1 to claim 6, further comprising an inquiry unit that, after receiving the change notification and prior to the specific trigger, prompts a user as to whether or not to reflect the new settings information in the switching control unit.

8. The communication control device of any one of claim 1 to claim 7, further comprising:
a determination unit that determines whether or not the new settings information of the network needed accompanying the change notification is stored in at least one of the communication control device or a switching control unit connected to the communication control device; and
a request unit that requests the new settings information from an external device external to the network in cases in which the determination unit has determined that the new settings information is not stored in either the communication control device or the switching control unit.

9. The communication control device of claim 8, wherein when the request unit has requested the new settings information, the reception unit receives the new settings information from the external device and the reflection unit reflects the received new settings information in the switching control unit.

10. The communication control device of claim 8, wherein the reception unit determines whether or not the communication control device and the switching control unit are operable in cases in which the determination unit has determined that the new settings information is not stored in either the communication control device or the switching control unit, and generates and transmits to the network, a notification that the communication control device and the switching control unit are inoperable and a diagnostic code indicating a cause of the inoperability, in cases in which the communication control device and the switching control unit have been determined to be inoperable.

11. A vehicle comprising:
the communication control device of any one of claim 1 to claim 10;
at least one switching control unit; and
a control device connected to the switching control unit.

12. A communication control method that controls communication of a network, the communication control method being processing executed by a communication control device, and the processing comprising:
receiving a change notification related to a change in a communication setting of the network; and
after receiving the change notification, reflecting new settings information of the network needed to accompany the change notification in a switching control unit connected to the communication control device, by reflection at a specific trigger to operate the network.

13. A communication control program that controls communication of a network, the communication control program causing processing to be executed by a communication control device, and the processing comprising:
receiving a change notification related to a change in a communication setting of the network; and
after receiving the change notification, reflecting new settings information of the network needed to accompany the change notification in a switching control unit connected to the communication control device, by reflection at a specific trigger to operate the network.

Statement under Art. 19.1 PCT
The recitation "in the communication control device and" in claim 1 is deleted so as to specify that an object, to which "a reflection unit" reflects "new settings information", is "a switching control unit". Cilam 2 is added by an amendment so as to specify that an object, to which "a reflection unit" reflects "new settings information", is "the communication control device". Added claim 2 is besed on the description in paragraph [0045] in the original specification. Amended Claims 3 to 13 correspond to the original Claims 2 to 12, claim numbers are incremented resulting from adding claim 2, and claim numbers from which the dependent claims depend respectively. Amended Claims 12 and 13 correspond to claims in which each of the recitation "a communication control device and" is deleted and each of the recitation "a computer" is replaced to "a communication control device" in Claims 11 and 12 so as to specify that an object, to which "new settings information" is reflected, is "a switching control unit" and that a subject which executes processing, is "a communication control device".
